# EUROPEAN PATENT SPECIFICATION

(11) **EP 3 660 652 B1**
(45) Date of publication and mention of the grant of the patent: **08.11.2023**
(21) Application number: 18208576.1
(22) Date of filing: 27.11.2018
(51) Int. Cl.: G06F 3/12

(54) **METHOD FOR DETERMINING AN OPTIMAL INPUT RESOURCE PARAMETER FOR A PRINT PRODUCT**
VERFAHREN ZUR BESTIMMUNG EINES OPTIMALEN EINGABERESSOURCENPARAMETERS FÜR EIN DRUCKPRODUKT
PROCÉDÉ DE DÉTERMINATION D'UN PARAMÈTRE DE RESSOURCES D'ENTRÉE OPTIMAL POUR UN PRODUIT D'IMPRESSION

(43) Date of publication of application: 03.06.2020
(73) Proprietor: Canon Production Printing Holding B.V., 5914 HH Venlo (NL)
(72) Inventor: ROELFS, Harmannus B., 5914 CA Venlo (NL); GEELS, Jan H., 5914 CA Venlo (NL); BLASIAK, Daniel B., 5914 CA Venlo (NL); BRÜNNER, Marvin P., 5914 CA Venlo (NL)
(74) Representative: Canon Production Printing IP Department

(56) References cited:
- US-A1- 2009 006 166
- US-A1- 2012 020 513
- US-A1- 2017 206 041

## Description

### FIELD OF THE INVENTION

The present invention pertains to a method for determining an optimal input resource parameter for an input resource for a print product to be produced by a production line including a printer and a finisher, as well as to a printer controller configured for performing said method and to a printer comprising said printer controller. The invention further pertains to a computer program product, a data storage medium and a data stream comprising program code for performing said method.

### BACKGROUND ART

Nowadays, a large variety of print products can be produced by standardized production lines very quickly and according to individual preferences of a customer. Such production lines for print products generally comprise a printer, that is a machine configured for marking a recording medium (or medium for short) such as paper with a marking substance such as ink, as well as a finisher.

The finisher is configured to process marked (or: printed) sheets of the medium to produce a variety of print products like loose leave documents, booklets, brochures, folders, bound books etc. In this sense, finishing is herein to be understood as performing actions on printed sheets of a recording medium after they have been printed. Furthermore, a finisher may be understood to comprise a plurality of finishing devices, for example, a cutting device, a perforating or punching device, a binding device and/or the like. Finishing actions performed by the finisher may comprise a folding, cutting, trimming, stapling, punching, creasing and so on. An example of an enumeration of finishing actions is given in "JDF Specification", Release 1.5/Dec. 31, 2013 or in "JDF Specification" Release 1.6/Feb. 28, 2018.

Usually, an operator of the production line selects a sufficiently large type of a medium, provides information about the selected type of medium to the production line and provides information about the desired print product to the production line. The types and sequence of actions required to be performed by the production line in order to produce the desired print product from the selected type of medium are either also input by the operator or are automatically determined.

In US 2017/0206041 A1 (hereafter also cited as "van Horssen et al.") methods and principles are described for estimating and utilizing durations of various steps during the printing and/or finishing actions. Information gained and prepared in this way can be stored in a production route model, which can be executed in a simulation step and which may then provide information about timings of a particular production (that is printing and finishing) process. Such a model may be used in determining an efficient sequence of actions to produce the desired print product.

US 2012/020513 A1 describes a printed document verification by means of a representation system that generates an electronic output representation of the document to be printed and finished.

US 2009/006166 A1 describes a systematic approach for handling cost and utility dependencies together in partial satisfaction planning for a printing environment. However, although the selected type of medium may have been sufficiently large to produce the desired print product, a lot of waste may have been produced as well due to e.g. large sections of the medium sheets having to be trimmed off.

### SUMMARY OF THE INVENTION

It is one of the objects of the present invention to provide a method for determining an optimal input resource parameter for an input resource for a print product to be produced by a production line. Another object is to provide a printer controller and a printer which are capable to perform such methods.

The above objects are solved by the independent claims of the present invention.

According to a first aspect, the invention provides a method according to claim 1.

By determining the optimal input resource parameter starting from the end product and moving on towards the input resources in the simulation, much more suitable parameters (or: properties) of the input resources can be determined.

The production line simulation model provided in step b) may be based on, or realized as, described in US 2017/0206041 A1 (van Horssen et al.).

Herein, the wording "simulating" and "performing a simulation" shall be understood to be interchangeable and will be used in each case so as to facilitate understanding as well as clarity and conciseness.

During the simulation, at least one quantity is tracked, in particular any or all of the following:
- an amount of medium wasted (in particular: the amount of medium trimmed or cut off);
- an amount of ink wasted (in particular ink printed on sections of the medium that are later trimmed or cut off);
- a duration for the sequence to be performed;
- and/or the like.

The generating of the recommendation signal is based on at least one of the at least one tracked quantity.

It should be understood that the present invention is applicable to all input resources necessary or useful for the print product to be produced but may also only be applied to one or more but not all of the necessary input resources.

The at least one input resource includes for example:
- a medium to be marked (i.e. printed on) by the printer of the production line;
- an ink to be used for marking (i.e. printing) on the medium;
- an adhesive used for attaching sheets of the medium to one another, e.g. a glue;
- a stapling device to be used for stapling sheets of the medium together;
- a binding structure (e.g. staples) to be used for binding sheets of the medium together;
- and/or the like.

Input resource parameters of the medium may include any or all of:
- a format (e.g. one of the A and/or B series of ISO 216, which includes the commonly used A4 size and/or an US letter format such as Legal or Letter);
- an area density (for example 80 gsm, i.e. 80 grams per square meter);
- a thickness;
- an air permeability;
- a porosity;
- a degree of surface coating (e.g. measured in percent, or in a label such as "uncoated", "matte", "glossy" etc.);
- and/or the like.

The recommendation signal may be output as an optic, acoustic and/or haptic signal.

For example, the recommendation signal controls a display device (which may be part of the production line, e.g. a display of a printer) to display a written or visual recommendation such as "choose paper format DIN A 4, 80 gsm.

The display may further be controlled by the recommendation signal to display a graphical indication where an input resource having the recommended input resource parameter is stored, for example, a graphic representation of a shelf wherein the storage location of said input resource is marked or highlighted. A storage location of the input resource may be provided with a signaling device (such as a colored lamp, a loudspeaker, a vibrator and/or the like) that is controlled by the recommendation signal to indicate that the contents of said storage location are recommended as input resources.

In some cases, the simulation will provide the preliminary result that an input resource (e.g. an input medium sheet) with a specific input resource parameter (e.g. a sheet of a specific size) would be ideal, although input resources with that input resource parameter (e.g. input medium sheets of that size) are not standardized and/or, e.g. according to a digital ledger or database, not presently available at the production line. In such cases, the recommendation signal preferably recommends the best-fitting available and/or standardized size, i.e. the next-best available and/or standardized input resource.

According to a second aspect, the invention provides a printer controller configured to perform the method according to an embodiment of the first aspect of the present invention. Although designated as a printer controller as is common in the field, the printer controller may be configured to control not only the printer but also the finisher. The printer controller may thus comprise a printer control module configured to control the printer and a finisher control module configured to control the finisher.

The printer controller may be realized in hardware, such as a circuit or a printed circuit board and/or comprising transistors, logic gates and other circuitry. Additionally or alternatively, the printer controller may be at least partially realized in terms of software. Accordingly, the printer controller may comprise, or be operatively coupled to, a processor and a memory storing a software or a firmware that is executed by the processor to perform the functions of the printer controller. Signals may be received by an input interface of the printer controller and signals that the processor of the printer controller creates may be outputted by an output interface of the printer controller. The printer controller may be implemented, at least partially, as a microcontroller, an ASIC, an FPGA and so on.

According to a third aspect, the invention provides a printer comprising a printer controller according to an embodiment of the second aspect of the present invention.

According to a fourth aspect, which is not part of the claimed invention, a production line is provided comprising a printer controller according to an embodiment of the second aspect of the present invention and/or comprising a printer according to an embodiment of the third aspect of the present invention.

According to a fifth aspect, the invention provides a computer program product comprising executable program code configured to, when executed, perform the method according to an embodiment of the first aspect of the present invention.

According to a sixth aspect, which is not part of the claimed invention, a non-transitory computer-readable data storage medium is provided comprising executable program code configured to, when executed, perform the method according to an embodiment of the first aspect of the present invention.

According to a seventh aspect, which is not part of the claimed invention, a data stream is provided comprising, or configured to generate, executable program code configured to, when executed, perform the method according to an embodiment of the first aspect of the present invention.

Additional advantages, and the solution of additional problems, will be apparent from the subject-matter of the dependent claims as well as from the description and the drawings.

In some embodiments, in the simulation each action is simulated based on constraints and/or capabilities of at least one device involved in performing the respective action.

Each action of each of the at least one simulated sequences is simulated based on constraints and/or capabilities of at least one device involved in performing the respective action in the production line.

Each action may further be simulated based on constraints and/or capabilities of at least one other device not directly involved in performing the respective action.

For example, an in principle possible sequence may involve a cutting step to be performed by a cutting device. When it is a known constraint of said cutting device that it cannot cut intermediate products thicker than a known thickness threshold, a simulated sequence which results in said cutting device necessarily receiving an intermediate product with a thickness larger than said thickness threshold will be discarded, i.e. the simulation of that sequence in reverse order may be terminated, or it may be finished but it will not be considered when generating the recommendation signal.

In some embodiments, the actions of the at least one sequence comprise any or all of:
- cutting ("ToCut"), by at least one cutting device as part of the finisher;
- folding ("ToFold"), by at least one folding device as part of the finisher;
- perforating ("ToPerforate"), by at least one perforating device as part of the finisher;
- printing ("ToPrint"), by the printer, or in particular, by at least one print head of the printer;
- punching ("ToPunch"), by at least one punching device as part of the finisher;
- stapling ("ToStaple"), by at least one stapling device as part of the finisher;
- stitching ("ToStitch"), by at least one stitching device as part of the finisher;
- trimming ("ToTrim"), by at least one trimming device as part of the finisher.

The terms in brackets ("ToCut", "ToFold" etc.) are symbolic descriptions for the actions as used e.g. in van Horssen et al.

In some embodiments, the recommendation signal comprises a recommendation about a type of input sheet of a medium.

In particular, the medium may be a type of paper such as an uncoated paper, matte paper, glossy paper and/or the like. However, the present invention is also applicable to other types of media such as fabrics.

In some embodiments, the recommendation signal comprises a recommendation about a format of the input sheet of paper.

In some embodiments, the recommendation signal comprises a recommendation about a thickness of the input sheet of paper.

Preferably, the recommendation signal comprises a recommendation about all of the above, i.e. about a type of input sheet of a medium, about its format and about its thickness. Optionally, the recommendation signal may comprise a recommendation about even more input resource parameters. The recommendation signal may also recommend a specific brand name or an individual specification of a n input resource, for example "paper of brand A, series B, number C".

Advantageously, a list of currently available input resources is provided, e.g. stored in a digital ledger or database which may be automatically or manually updated. The recommendation signal may then be generated so as to recommend only input resources that are currently available according to said digital ledger or database. Additionally or alternative, a list of allowed input resources may be provided and the recommendation signal may be generated so as to recommend only input resources on said list of allowed input resources. The list of allowed input resources may be provided with, or based on, the received input data, in particular dependent on a specific print product to be produced.

For example, a customer may stipulate in their order that only organically and sustainably produced input resources shall be used in producing the desired print product. The recommendation signal will then only recommend input resources from a list which comprises only input resources fulfilling those stipulations.

In some embodiments, the at least one input resource property and/or at least one property of the print product derived from the at least one input resource property is set to a respective predetermined value for the performing of the simulation, and the actions in the simulation which affect it are simulated to affect the respective predetermined value.

Preferably, the predetermined value is a symbolic value such as "x" which is manipulated throughout the simulation, or an integer value such as "1". This allows easy treatment and understanding of the transformation of that value throughout the simulation.

In some embodiments, the recommendation regarding the optimal input resource parameter is based on at least one preset and/or adjustable criterion.

The at least one criterion may comprise any or all of:
- reducing input resource waste;
- reducing a production time necessary for the production line to produce the print product;
- meeting a predetermined cost criterion for producing the print product;
- at least one constraint regarding allowed input resources (see above in the context of the discussion of a list of allowed input resources).

For example, the cost criterion may be to reduce cost as much as possible, or to keep costs below a predetermined threshold value. For example, a certain type of thin paper may in principle be optimal for the desired print product but may be so expensive that a cost limit provided by a customer would be exceed when choosing that type of thin paper. The at least one criterion may comprise a plurality of weighted criteria so that, for example, a large reduction in cost may overcompensate for a moderate increase in production time or the like.

In some embodiments, not part of the claimed invention, not only a single sequence of actions is simulated, but a plurality of sequences are simulated in reverse order. The method may then further comprise the steps of:
acquiring, after the generating of the recommendation signal, a user input regarding an actually selected parameter for at least one of the at least one input resource;
determining, out of the plurality of simulated sequences of actions simulated in step c), an optimal sequence to be used for producing the print product based on the acquired user input; and
generating a further recommendation signal comprising a recommendation for the thus determined sequence and/or controlling the production line to follow the thus determined sequence when producing the print product.

The determining of the optimal sequence may optionally further be based on the at least one criterion set for the generating of the recommendation signal.
region of the GUI.

### BRIEF DESCRIPTION OF THE DRAWINGS

The present invention will become more fully understood from the detailed description given hereinbelow and the accompanying schematic drawings which are given by way of illustration only, and thus are not limitative of the present invention, and wherein:
- Fig. 1: shows a schematic flow diagram illustrating a method according to an embodiment of the first aspect of the present invention;
- Fig. 2: shows a schematic block diagram illustrating a production line according to the fourth aspect of the present invention, a printer according to an embodiment of the third aspect of the present invention and a printer controller according to an embodiment of the second aspect of the present invention;
- Fig. 3: shows a schematic block diagram of a computer program product according to an embodiment of the fifth aspect of the present invention; and
- Fig. 4: shows a schematic block diagram of a non-transitory computer-readable data storage medium according to an embodiment of the sixth aspect of the present invention.

The present invention will now be described with reference to the accompanying drawings. The numbering of method steps is, if not explicitly or implicitly described otherwise, not intended to necessarily indicate a time ordering of steps. In particular, several steps may also be performed simultaneously.

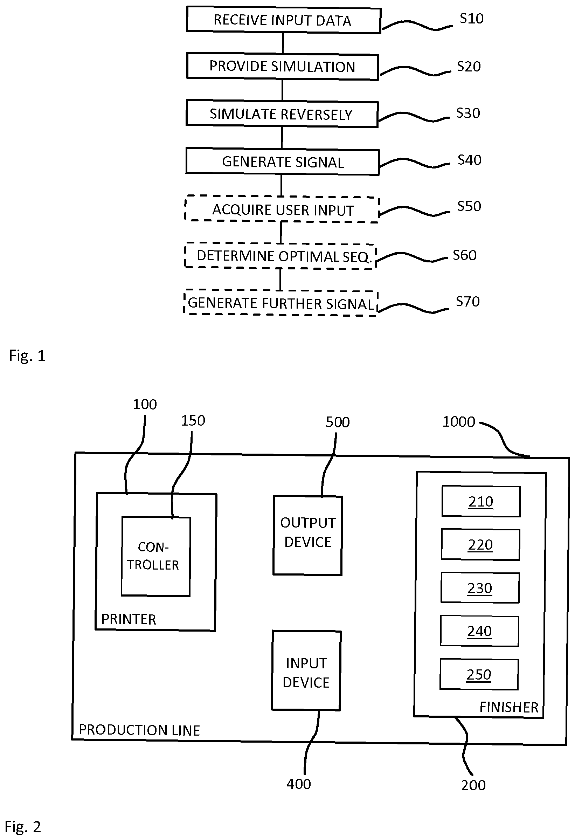

Fig. 1 shows a flow diagram illustrating a method for determining an optimal input resource parameter for an input resource for a print product to be produced by a production line including a printer and a finisher, according to an embodiment of the first aspect of the present invention.

In describing the method according to Fig. 1, reference will also be made to elements and reference signs shown in Fig. 2. Fig. 2 shows a schematic block diagram illustrating a production line 1000 according to the fourth aspect of the present invention. The production line 1000 comprises a printer 100 according to an embodiment of the third aspect of the present invention and a finisher 200, wherein the finisher 200 may comprise several finishing devices such as a gathering station 210, a folding device 220, a cutting device (or: cutter) 230, a trimming device 240, a punching device 250 and/or the like. Of any of the finishing device a plurality may be present. For example, each of the finishing devices may have its own gathering station.

The production line 1000 further comprises an input device 400 for inputting a user input into the production line 1000, e.g. a touchscreen and/or a keyboard and/or a voice input and recognition module and/or the like. The input device 400 may be integrated into the printer 100 or into another part of the production line 1000. The input device 400 may also be integrated into a mobile device and/or be realized by an app running on a mobile device such as a smartphone, wherein the mobile device able to wirelessly communicate with the rest of the production line 1000, e.g. via a LAN or WAN connection such as the Internet.

The production line 1000 further comprises an output device 500 for outputting a recommendation signal to a user, e.g. a display device for visual outputs and/or a loudspeaker for acoustic outputs and/or a vibrator for haptic outputs. The output device 500 may be integrated into the printer 100 or into another part of the production line 1000. The output device 500 may also be integrated into a mobile device and/or be realized by an app running on a mobile device such as a smartphone, wherein the mobile device able to wirelessly communicate with the rest of the production line 1000, e.g. via a LAN or WAN connection such as the Internet.

The production line 1000 also comprises a printer controller 150 according to an embodiment of the second aspect of the present invention which may be, partially or completely, integrated into the printer 100. The printer controller 150 may also be realized in a distributed way, e.g. as a program run by a remote server such as a cloud computing platform.

Although in the following the method according to Fig. 1 will be described also with reference to elements of Fig. 2, the method is not restricted to being performed by or with the elements shown or described in connection with Fig. 2. However, the method according to Fig. 2 can be performed, or executed, by, or for, the production line 1000 as shown in Fig. 2 and can be adapted or modified according to any options, modifications, variations and embodiments as described for the production line 1000 and its sub-components and vice versa.

Referring now to Fig. 1, in a step S10, input data indicating a print product to be produced by a production line 1000 including a printer 100 and a finisher 200 are received, by a printer controller 150 of the production line 1000. The print product may e.g. be a booklet, a brochure, a pamphlet and/or the like. Apart from printing, a plurality of actions may be necessary or useful to produce the desired print product, e.g. gathering, stitching, folding, trimming, transporting, punching and/or the like.

In a step S20, a production line simulation model capable of simulating all actions to be performed by the production line 1000 in order to produce the print product from at least one input resource in at least one sequence of actions is provided. The production line simulation model is stored and run within the printer controller 150, or may be stored and run on another computing device (including at least an input/output interface, a memory and a processor) of the production line 1000. The production line simulation model may also be run and made accessible by a remote server, in particular by a cloud computing device.

A simulation module running the production line simulation model may partly reside in the printer controller 150 of the production line 1000 and partly on at least one computer in a network to which the production line 1000, in particular the printer 100 and/or the finisher 200 is connected or connectable, e.g. via a network such as a LAN or WAN network, for instance the Internet. The simulation module may also completely reside in a network connected to the printer 100 and/or to the finisher 200.

In a step S30, a simulation of each of the at least one sequence is performed in reverse order, starting from a last action necessary to finish the print product according to each sequence and going on until a first action applied to the at least one input resource according to each sequence.

As a simple example, a desired print product may comprise at least the following actions:
S) separating a sheet from an input module of the printer 100;
P1) printing, by the printer 100, a sheet on a first side,
P2) printing, by the printer 100, the sheet on a second side,
G) gathering (e.g. by the gathering station 210) at least one sheet,
F) folding, by the folding device 220, at least one sheet,
C) cutting at least one sheet, by a cutting device 230, and
T) trimming at least one sheet, by a trimming device 240.

As the finisher 200 (comprising the gathering station 210, the folding device 220 and the cutting device 230) is usually arranged in line after the printer 100 in the production line 1000, the printing actions will generally be the first actions of each sequence leading to the desired print product.

In the example, however:
a) the folding action F) may precede the cutting action C),
   or
b) the cutting action C) may precede the folding action F).

In other words, a first sequence SQ1 of actions leading to the desired print product from the input resources (sheets of paper, and ink) is:
SQ1: S) -> P1) -> P2) -> G1) -> F) -> C) -> G2) -> T),
such that at least one sheet will be printed on both sides P1), P2), a plurality of sheets will be gathered in G1), then folded F). The folded sheets will be gathered again G2), for example by a second gathering station, and then trimmed T).

A second sequence SQ2 of actions leading to the desired print product from the input resources paper and ink is:
SQ2: S) -> P1 -> P2 -> G1) -> C) -> G2) -> F -> T),
such that at least one sheet will be printed on both sides P1, P2), a plurality of sheets will be gathered G1), then cut C). The cut parts of the sheets will then be gathered again G2), then folded F), and then trimmed T).

In the simulation step S30, then both the first sequence SQ1 and the second sequence SQ2 are simulated as performed in reverse order, i.e. a simulation SSQ1 of the first sequence SQ1 will be performed as:
SSQ1: T) -> G2 -> C) -> F) -> G1) -> P2 -> P1) -> S),
   and a simulation SSQ2 of the second sequence SQ2 will have be performed as:
SSQ2: T) -> F) -> G2) -> C) -> G1) -> P2) -> P1) -> S).

It will be understood that further sequences are available in the present example. For instance, the trimming T) may be performed before the folding F) in SQ1 or after, and before the cutting C) or after, and the same for SQ2. Already in this simple example a number of different sequences are possible, and therefore simulations of said number of sequences in reverse order may be or will be performed.

As has been described in the foregoing, each of the actions is simulated based on constraints and/or capabilities of at least one device involved in performing the respective action in the production line 1000, and/or based on constraints and/or capabilities of at least one other device not directly involved in performing the respective action in the production line 1000.

In the present example, the method is designed to determine an optimal format of the sheets of paper (as one of the input resource parameters in the present example), wherein the reduction of waste of paper is set as a single criterion. As has been described in the foregoing, several criteria, some of the or each optionally with a different weight, could be set.

Accordingly, in the present example in step S30 the amount of paper wasted in each of the sequences will be monitored. It is evident that different amounts of paper are cut off depending on whether one, e.g., first cuts and then trims, or first trims and then cuts, in particular since trimming generally requires a minimum amount to trim (usually in the range of about 3mm).

Further, dimensions of the (in the simulation) produced print product in particular are then observed during the simulation step S30 when the actions of the first and second sequences are performed according to SSQ1 and SSQ2 and the other, not explicitly described sequences and simulations of sequences.

In a step S40, a recommendation signal is generated and output which comprises a recommendation regarding an optimal input resource parameter of at least one of the at least one input resource based on the performed simulations in step S30.

In the present example, the recommendation signal indicates for each of the possible sequences which paper format would be optimal for reducing the amount of paper wasted during the producing of the print product, and/or indicates an optimal sequence to be chosen, in particular a sequence and paper format resulting in least west of paper overall.

The recommendation signal is as has been described in the foregoing, be based on a user input wherein the user may set conditions such as a specifying a list of allowed sequences (for example because only those sequences can be realized by a present production line 1000) and/or specifying a list of fixed input resource parameters (for example a specific type or format of paper which has been explicitly requested by a customer). Such inputs may also be made automatically.

Accordingly, the method of Fig. 1 further comprises a step S50 of acquiring, after the generating of the recommendation signal, a user input regarding an actually selected parameter for at least one of the at least one input resource.

The user input is input into the production line 1000 e.g. via the input device 400 as described in the foregoing.

Based on the simulations in step S30, the method is able to generate the recommendation signal perfectly suited to the given criteria and/or to the user input.

The method of Fig. 1 may further comprise the steps of determining S60, out of the plurality of simulated sequences, an optimal sequence to be used for producing the print product based on the acquired user input; and
generating S70 a further recommendation signal comprising, or adjusting the recommendation signal generated in step S40 to comprise, a recommendation for the thus determined sequence. The further recommendation signal and/or the adjusted recommendation signal are configured to control the production line 1000 to follow the thus determined sequence when producing the print product.

The recommendation signal is output visually in that a display device (as, or as part of, the output device 500) is controlled to visually give recommendations to a user. The recommendation signal may also provide different recommendations together with corresponding criteria that are met especially by specific recommendations. The recommendation signal is output by the output device 500 as has been described in the foregoing.

The display device may be controlled to give recommendations such as "To minimize paper waste, use DIN A4 format, 80 gsm, and select sequence A; To minimize total production time, use DIN A5 format, 70 gsm, and select sequence B, .." and/or the like, in suitable degrees of automation.

With respect to Fig. 2, it will be understood that the printer controller 150 is configured to perform the method according to the first aspect of the present invention, in particular the method as has been described with respect to Fig. 1.

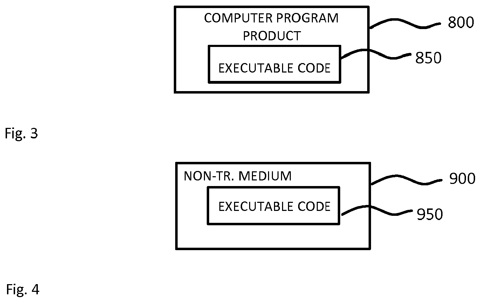

Fig. 3 shows a schematic block diagram illustrating a computer program product 800 according to the emembodiment of the fifth aspect of the claimed invention. The computer program product 800 comprises executable code 850 configured to, when executed, perform the method according to the embodiment of the first aspect, e.g. as described with respect to the production line 1000, the printer controller 150, or the method described with respect to Fig. 1 and/or according to any of the variants and modifications of the production line 1000, the printer controller 150 and/or of the method described herein.

Fig. 4 shows a schematic block diagram illustrating a non-transitory computer-readable data storage medium 900 according to an embodiment which is not part of the claimed invention. The non-transitory computer-readable data storage medium 900 comprises executable code 950 configured to, when executed, perform the method according to an embodiment of the first aspect, e.g. as described with respect to the production line 1000, the printer controller 150, or the method described with respect to Fig. 1 and/or according to any of the variants and modifications of the production line 1000, the printer controller 150 and/or of the method described herein.

The non-transitory computer-readable data storage medium 900 may, specifically, be formed as a CD or a CD-ROM, a DVD or a DVD-ROM, a BluRay disc or a BluRay-ROM disc, a magnetic hard drive, a solid state disk (SSD) hard drive, a USB memory device and so on.

Further, the terms and phrases used herein are not intended to be limiting; but rather, to provide an understandable description of the invention. The terms "a" or "an", as used herein, are defined as one or more than one. The term plurality, as used herein, is defined as two or more than two. The term another, as used herein, is defined as at least a second or more. The terms including and/or having, as used herein, are defined as comprising (i.e., open language).

It will be evident that the described embodiments may be varied in many ways.

## Claims

1. A method for determining an optimal input resource parameter for an input resource necessary for a print product to be produced by a production line (1000) including a printer (100) and a finisher (200), the method comprising the steps of:
receiving (S10) input data indicating a print product to be produced by a production line (1000) including a printer and a finisher (200);
providing (S20) a production line (1000) simulation model capable of simulating all actions to be performed by the production line (1000) in order to produce the print product from at least one input resource in at least one sequence of actions;
performing (S30) a simulation of each of the at least one sequence of actions in reverse order, starting from a last action necessary to finish the print product according to each sequence and going on until a first action applied to the at least one input resource according to each sequence;
generating (S40) a recommendation signal comprising a written or visual recommendation regarding an optimal input resource parameter of at least one of the at least one input resource based on the performed simulations; and
displaying the written or visual recommendation on a display device (500) controlled by the recommendation signal,
wherein the method comprises the step of, during the performance (S30) of the simulation, tracking at least one quantity of input resource waste, the resource waste being an amount of medium waste and/or an amount of ink waste due to cutting and trimming actions, and wherein the recommendation regarding the optimal input resource parameter is based on at least one of the at least one tracked quantity.

2. The method according to claim 1,
wherein in the simulation each action is simulated based on constraints and/or capabilities of at least one device (210, 220, 230, 240, 250) involved in performing the respective action.

3. The method according to claim 1 or 2,
wherein the actions of the at least one sequence comprise any or all of:
- cutting;
- folding;
- perforating;
- printing;
- punching;
- stapling;
- stitching;
- trimming.

4. The method according to any one of claims 1 to 3,
wherein the recommendation signal comprises a recommendation about a type of input sheet of a medium.

5. The method according to any one of claims 1 to 4,
wherein the recommendation signal comprises a recommendation about a format of the input sheet of paper.

6. The method according to any one of claims 1 to 5,
wherein the recommendation signal comprises a recommendation about a thickness of the input sheet of paper.

7. The method according to any one of claims 1 to 6,
wherein the at least one input resource property and/or at least one property of the print product derived from the at least one input resource property is set to a respective predetermined value for the performing of the simulation, and wherein the actions in the simulation which affect it are simulated to affect the respective predetermined value.

8. The method according to any one claims 1 to 7,
wherein the recommendation regarding the optimal input resource parameter is based on a criterion to reduce a production time necessary for the production line (1000) to produce the print product.

9. The method according to any one of claims 1 to 8,
wherein the recommendation regarding the optimal input resource parameter is based on a criterion to meet a predetermined cost criterion for producing the print product.

10. The method according to any one of claims 1 to 9,
wherein a plurality of sequences are simulated in reverse order;
further comprising the steps of:
acquiring (S60), after the generating of the recommendation signal, a user input regarding an actually selected parameter for at least one of the at least one input resource;
determining (S60), out of the plurality of simulated sequences, an optimal sequence to be used for producing the print product based on the acquired user input;
generating (S70) a further recommendation signal comprising a written or visual recommendation for the thus determined sequence and/or controlling the production line (1000) to follow the thus determined sequence when producing the print product; and
displaying the written or visual recommendation on a display device (500) controlled by the further recommendation signal.

11. A printer controller (150) configured to perform the method according to any of claims 1 to 10.

12. A printer (100) comprising a printer controller (150) according to claim 11.

13. A computer program product (800) comprising executable program code (850) configured to, when executed, by a printer controller, perform the method according to any one of claims 1 to 10.

## Patentansprüche

1. Ein Verfahren zum Bestimmen eines optimalen Eingabe-Ressourcen-Parameters für eine Eingabe-Ressource, die für ein Druckprodukt erforderlich ist, das durch eine Produktionslinie (1000), die einen Drucker (100) und einen Finisher (200) einschließt, hergestellt werden soll, wobei das Verfahren die folgenden Schritte umfasst:
Empfang (S10) von Eingabedaten, die ein von einer Produktionslinie (1000) mit einem Drucker und einem Finisher (200) herzustellendes Druckprodukt angeben;
Bereitstellen (S20) eines Simulationsmodells für die Produktionslinie (1000), das in der Lage ist, alle von der Produktionslinie (1000) auszuführenden Aktionen zu simulieren, um das Druckprodukt aus mindestens einer Eingangsressource in mindestens einer Aktionssequenz herzustellen;
Durchführen (S30) einer Simulation jeder der mindestens einen Sequenz von Aktionen in umgekehrter Reihenfolge, beginnend mit einer letzten Aktion, die notwendig ist, um das Druckprodukt gemäß jeder Sequenz fertigzustellen, und fortfahrend bis zu einer ersten Aktion, die auf die mindestens eine Eingangsressource gemäß jeder Sequenz angewendet wird;
Erzeugen (S40) eines Empfehlungssignals, das eine schriftliche oder visuelle Empfehlung bezüglich eines optimalen Eingangsressourcenparameters von mindestens einer der mindestens einen Eingangsressource auf der Grundlage der durchgeführten Simulationen umfasst; und
Anzeige der schriftlichen oder visuellen Empfehlung auf einer Anzeigevorrichtung (500), die durch das Empfehlungssignal gesteuert wird,
wobei das Verfahren den Schritt umfasst, während der Durchführung (S30) der Simulation mindestens eine Menge an Eingangsressourcenabfall zu verfolgen, wobei der Ressourcenabfall eine Menge an Mediumabfall und/oder eine Menge an Tintenabfall aufgrund von Schneide- und Trimmvorgängen ist, und wobei die Empfehlung bezüglich des optimalen Eingangsressourcenparameters auf mindestens einer der verfolgten Menge basiert.

2. Das Verfahren nach Anspruch 1,
wobei in der Simulation jede Aktion auf der Grundlage von Beschränkungen und/oder Fähigkeiten mindestens eines Geräts (210, 220, 230, 240, 250) simuliert wird, das an der Durchführung der jeweiligen Aktion beteiligt ist.

3. Das Verfahren nach Anspruch 1 oder 2,
wobei die Aktionen der mindestens einen Sequenz eines oder alle der folgenden Elemente umfassen:
- Schneiden;
- Falten;
- Perforieren;
- Drucken;
- Stanzen;
- Heften;
- Nähen;
- Trimmen.

4. Das Verfahren nach einem der Ansprüche 1 bis 3,
wobei das Empfehlungssignal eine Empfehlung über die Art des Eingabeblatts eines Mediums umfasst.

5. Das Verfahren nach einem der Ansprüche 1 bis 4,
wobei das Empfehlungssignal eine Empfehlung über ein Format des eingegebenen Papierbogens umfasst.

6. Das Verfahren nach einem der Ansprüche 1 bis 5,
wobei das Empfehlungssignal eine Empfehlung über die Dicke des eingegebenen Papierbogens enthält.

7. Das Verfahren nach einem der Ansprüche 1 bis 6,
wobei die mindestens eine Eingangsressourceneigenschaft und/oder mindestens eine von der mindestens einen Eingangsressourceneigenschaft abgeleitete Eigenschaft des Druckprodukts für die Durchführung der Simulation auf einen jeweiligen vorbestimmten Wert gesetzt wird, und wobei die Aktionen in der Simulation, die sich darauf auswirken, so simuliert werden, dass sie sich auf den jeweiligen vorbestimmten Wert auswirken.

8. Verfahren nach einem der Ansprüche 1 bis 7,
wobei die Empfehlung bezüglich des optimalen Input-Ressourcen-Parameters auf einem Kriterium zur Reduzierung der Produktionszeit basiert, die für die Produktionslinie (1000) zur Herstellung des Druckprodukts erforderlich ist.

9. Verfahren nach einem der Ansprüche 1 bis 8,
wobei die Empfehlung bezüglich des optimalen Input-Ressourcen-Parameters auf einem Kriterium zur Erfüllung eines vorgegebenen Kostenkriteriums für die Herstellung des Druckprodukts basiert.

10. Verfahren nach einem der Ansprüche 1 bis 9,
wobei eine Vielzahl von Sequenzen in umgekehrter Reihenfolge simuliert wird;
und umfasst ferner die folgenden Schritte:
Erfassen (S60), nach dem Erzeugen des Empfehlungssignals, einer Benutzereingabe bezüglich eines tatsächlich ausgewählten Parameters für mindestens eine der mindestens einen Eingaberessourcen;
Bestimmen (S60) einer optimalen Sequenz aus der Vielzahl der simulierten Sequenzen, die für die Herstellung des Druckprodukts zu verwenden ist, basierend auf der erfassten Benutzereingabe;
Erzeugen (S70) eines weiteren Empfehlungssignals, das eine schriftliche oder visuelle Empfehlung für die so bestimmte Reihenfolge umfasst, und/oder Steuern der Produktionslinie (1000), um der so bestimmten Reihenfolge bei der Herstellung des Druckprodukts zu folgen; und
Anzeige der schriftlichen oder visuellen Empfehlung auf einer Anzeigevorrichtung (500), die durch das weitere Empfehlungssignal gesteuert wird.

11. Eine Druckersteuerung (150), die so konfiguriert ist, dass sie das Verfahren nach einem der Ansprüche 1 bis 10 durchführt.

12. Ein Drucker (100) mit einer Druckersteuerung (150) gemäß Anspruch 11.

13. Ein Computerprogrammprodukt (800), das einen ausführbaren Programmcode (850) umfasst, der so konfiguriert ist, dass er, wenn er von einer Druckersteuerung ausgeführt wird, das Verfahren nach einem der Ansprüche 1 bis 10 durchführt.

## Revendications

1. Méthode de détermination d'un paramètre optimal de ressource d'entrée pour une ressource d'entrée nécessaire à la production d'un produit imprimé par une ligne de production (1000) comprenant une imprimante (100) et un finisseur (200), la méthode comprenant les étapes suivantes:
recevoir (S10) des données d'entrée indiquant un produit d'impression à
produire par une ligne de production (1000) comprenant une imprimante et
un finisseur (200);
fournir (S20) un modèle de simulation de la chaîne de production (1000) capable de simuler toutes les actions à effectuer par la chaîne de production (1000) afin de produire le produit imprimé à partir d'au moins une ressource d'entrée dans au moins une séquence d'actions;
effectuer (S30) une simulation de chacune des au moins une séquence d'actions dans l'ordre inverse, en commençant par une dernière action nécessaire pour terminer le produit imprimé selon chaque séquence et en continuant jusqu'à une première action appliquée à la au moins une ressource d'entrée selon chaque séquence;
générer (S40) un signal de recommandation comprenant une recommandation écrite ou visuelle concernant un paramètre de ressource d'entrée optimal d'au moins une des ressources d'entrée sur la base des simulations effectuées; et
afficher la recommandation écrite ou visuelle sur un dispositif d'affichage (500) commandé par le signal de recommandation,
dans lequel le procédé comprend l'étape consistant, pendant l'exécution (S30) de la simulation, à suivre au moins une quantité de déchets de ressources d'entrée, les déchets de ressources étant une quantité de déchets de support et/ou une quantité de déchets d'encre dus aux actions de coupe et de rognage, et dans lequel la recommandation concernant le paramètre de ressource d'entrée optimal est basée sur au moins l'une des quantités suivies.

2. La méthode selon la revendication 1,
où, dans la simulation, chaque action est simulée sur la base des contraintes et/ou des capacités d'au moins un dispositif (210, 220, 230, 240, 250) impliqué dans l'exécution de l'action en question.

3. La méthode selon la revendication 1 ou 2,
dans lequel les actions de l'au moins une séquence comprennent l'une ou l'autre ou l'ensemble des actions suivantes:
- découpage;
- pliage;
- la perforation;
- l'impression;
- le coup de poing;
- agrafage;
- les coutures;
- le parage.

4. Méthode selon l'une des revendications 1 à 3,
le signal de recommandation comprend une recommandation concernant un type de feuille d'entrée d'un support.

5. La méthode selon l'une des revendications 1 à 4,
le signal de recommandation comprend une recommandation sur le format de la feuille de papier d'entrée.

6. La méthode selon l'une des revendications 1 à 5,
le signal de recommandation comprend une recommandation concernant l'épaisseur de la feuille de papier d'entrée.

7. Méthode selon l'une des revendications 1 à 6,
dans lequel l'au moins une propriété de la ressource d'entrée et/ou l'au moins une propriété du produit imprimé dérivée de l'au moins une propriété de la ressource d'entrée est fixée à une valeur prédéterminée respective pour l'exécution de la simulation, et dans lequel les actions de la simulation qui l'affectent sont simulées de manière à affecter la valeur prédéterminée respective.

8. Méthode selon l'une des revendications 1 à 7,
dans lequel la recommandation concernant le paramètre optimal de la ressource d'entrée est basée sur un critère de réduction du temps de production nécessaire à la ligne de production (1000) pour produire le produit imprimé.

9. Méthode selon l'une des revendications 1 à 8,
la recommandation concernant le paramètre optimal de la ressource d'entrée est basée sur un critère de respect d'un critère de coût prédéterminé pour la production du produit imprimé.

10. Méthode selon l'une des revendications 1 à 9,
dans lequel plusieurs séquences sont simulées dans l'ordre inverse;
comprenant en outre les étapes suivantes
l'acquisition (S60), après la génération du signal de recommandation, d'une entrée de l'utilisateur concernant un paramètre effectivement sélectionné pour au moins l'une des ressources d'entrée;
déterminer (S60), parmi la pluralité de séquences simulées, une séquence optimale à utiliser pour produire le produit imprimé sur la base de l'entrée utilisateur acquise;
générer (S70) un autre signal de recommandation comprenant une recommandation écrite ou visuelle pour la séquence ainsi déterminée et/ou commander la ligne de production (1000) pour qu'elle suive la séquence ainsi déterminée lors de la production du produit imprimé; et
afficher la recommandation écrite ou visuelle sur un dispositif d'affichage (500) commandé par le signal de recommandation supplémentaire.

11. Contrôleur d'imprimante (150) configuré pour exécuter la méthode selon l'une des revendications 1 à 10.

12. Imprimante (100) comprenant un contrôleur d'imprimante (150) selon la revendication 11.

13. Produit de programme informatique (800) comprenant un code de programme exécutable (850) configuré pour, lorsqu'il est exécuté par un contrôleur d'imprimante, exécuter la méthode selon l'une des revendications 1 à 10.
